# EUROPEAN PATENT APPLICATION

(11) **EP 4 794 121 A1**
(43) Date of publication of application: **19.08.2026**
(21) Application number: 25194823.8
(22) Date of filing: 08.08.2025
(51) Int. Cl.: H01Q 3/46, H01Q 15/00, H01Q 15/14, H01Q 15/23

(54) **ACTIVE DUAL-FREQUENCY LIQUID CRYSTAL TRANSMISSION AND REFLECTION ARRAY STRUCTURE**

(30) Priority: 14.02.2025 TW 114105566
(71) Applicant: TMY Technology Inc., New Taipei City 220056 (TW)
(72) Inventor: CHOU, Hsi-Hsir, 220056 New Taipei City (TW); WANG, Zi-Ji, 220056 New Taipei City (TW)
(74) Representative: Becker, Eberhard

(57) **Abstract**

Provided is an active dual-frequency liquid crystal transmission and reflection array structure including a first substrate layer (1), a second substrate layer (3), a first liquid crystal layer (2), a first surface unit (111), a second surface unit (121), a third surface unit (311), and a fourth surface unit (321). When the first liquid crystal layer (2) is not applied with a bias voltage, a center operating frequency of the active dual-frequency liquid crystal transmission and reflection array structure lies in a first frequency band. Conversely, when the first liquid crystal layer (2) is applied with a bias voltage, the center operating frequency of the active dual-frequency liquid crystal transmission and reflection array structure lies in a second frequency band. The first frequency band is higher than the second frequency band.

## Description

### BACKGROUND

### Technical Field

The disclosure relates to a transmission and reflection array structure, and in particular to an active dual-frequency liquid crystal transmission and reflection array structure.

### Related Art

General array structures are mostly passive array structures or array structures where each unit is individually controlled. However, the passive array structures lack adjustability and are difficult to adapt to the requirements of operating frequency bands and different beamforming directions. In addition, due to hardware limitations, the array structures that may individually control each unit have limited performance.

### SUMMARY

In view of this, the disclosure provides an active dual-frequency liquid crystal transmission and reflection array structure suitable for 5G mm wave communication frequency bands and low earth orbit satellite communication frequency bands.

An embodiment of the disclosure provide an active dual-frequency liquid crystal transmission and reflection array structure including a first substrate layer, a second substrate layer, a first liquid crystal layer, a first surface unit, a second surface unit, a third surface unit, and a fourth surface unit. The first liquid crystal layer is stacked and connected between the first substrate layer and the second substrate layer. The first substrate layer has a first upper surface and a first lower surface. The second substrate layer has a second upper surface and a second lower surface. The first surface unit is arranged in an array on the first upper surface. The second surface unit is arranged in an array on the first lower surface. The third surface unit is arranged in an array on the second upper surface. The fourth surface unit is arranged in an array on the second lower surface. When the first liquid crystal layer is not applied with a bias voltage, a center operating frequency of the active dual-frequency liquid crystal transmission and reflection array structure lies in a first frequency band. When the first liquid crystal layer is applied with a bias voltage, the center operating frequency of the active dual-frequency liquid crystal transmission and reflection array structure lies in a second frequency band. The first frequency band is higher than the second frequency band.

In an embodiment of the disclosure, a first part of the active dual-frequency liquid crystal transmission and reflection array structure forms a reflective unit cell. When the first liquid crystal layer is not applied with a bias voltage, the reflective unit cell is used as a reflection surface, and the center operating frequency of the reflective unit cell lies in the first frequency band.

In an embodiment of the disclosure, the first part of the active dual-frequency liquid crystal transmission and reflection array structure includes a first surface outer frame patch of the first surface unit, a first surface inner frame patch of the first surface unit, the first substrate layer, a second surface rectangle patch of the second surface unit, a second surface metal line of the second surface unit, the first liquid crystal layer, the second substrate layer, a third surface rectangle patch of the third surface unit, and a third surface metal line of the third surface unit.

In an embodiment of the disclosure, a second part of the active dual-frequency liquid crystal transmission and reflection array structure forms a transmissive unit cell. When the first liquid crystal layer is applied with a bias voltage, the transmissive unit cell is used as a transmission surface, and the center operating frequency of the transmissive unit cell lies in the second frequency band.

In an embodiment of the disclosure, the second part of the active dual-frequency liquid crystal transmission and reflection array structure includes a first surface cross-shaped patch of the first surface unit, the first substrate layer, the second surface unit, the first liquid crystal layer, the third surface unit, the second substrate layer, and the fourth surface unit.

In an embodiment of the disclosure, the first surface unit includes four first surface outer frame patches and a first surface cross-shaped patch. Each of the first surface outer frame patches has a first surface inner frame patch therein. The four first surface outer frame patches are respectively arranged around the first surface cross-shaped patch.

In an embodiment of the disclosure, a first surface rectangle slit is provided between the first surface outer frame patch and the corresponding first surface inner frame patch, and the center of each of the first surface inner frame patches has a first surface rectangle slot.

In embodiments of the disclosure, a length and a width of the first surface outer frame patch are 0.5mm to 3.3 mm.

In an embodiment of the disclosure, the first surface cross-shaped patch has a first longitudinal part and a first lateral part, and a length of the first longitudinal part and a length of the first lateral part are 1.5 mm to 8.5 mm.

In an embodiment of the disclosure, the second surface unit includes four second surface rectangle patches, multiple second surface metal lines connected to edges of the four second surface rectangle patches, and a second surface cross-shaped slot located at a center of each of the second surface rectangle patches.

In an embodiment of the disclosure, the four second surface rectangle patches and the second surface metal lines surround to form a second surface cross-shaped opening.

In an embodiment of the disclosure, the second surface cross-shaped slot has a second longitudinal part and a second lateral part, and a width of the second longitudinal part and a width of the second lateral part are 0.57 mm to 0.67 mm, and a length of the second longitudinal part and a length of the second lateral part are 3.25 to 3.35 mm.

In embodiments of the disclosure, the third surface unit includes four third surface rectangle patches, multiple third surface metal lines connected to edges of the four third surface rectangle patches, and a third surface square slot located at a center of each of the third surface rectangle patches.

In an embodiment of the disclosure, the four third surface rectangle patches and the third surface metal lines surround to form a third surface cross-shaped opening.

In an embodiment of the disclosure, the fourth surface unit is a fourth surface cross-shaped patch.

In an embodiment of the disclosure, the first surface unit, the second surface unit, the third surface unit, and the fourth surface unit are all formed by metal materials.

In an embodiment of the disclosure, before and after the first liquid crystal layer is applied with a bias voltage, a dielectric constant and a tangent loss of the first liquid crystal layer are 2.55 to 3.76 and 0.004 to 0.006, respectively.

In an embodiment of the disclosure, the first frequency band is 27 GHz to 29 GHz.

In an embodiment of the disclosure, the second frequency band is 17 GHz to 19 GHz.

In an embodiment of the disclosure, a number of the first surface units, a number of the second surface units, a number of the third surface units, and a number of the fourth surface units are all N*N, where N is a positive integer.

Based on the above, in the active dual-frequency liquid crystal transmission and reflection array structure of the disclosure, the first liquid crystal layer may be regarded as a switch to perform mode switching targeting the active dual-frequency liquid crystal transmission and reflection array structure. By further explanation, when the first liquid crystal layer is not applied with the bias voltage, the center operating frequency of the reflective unit cell may lie in the Ka frequency band, and when the first liquid crystal layer is applied with the bias voltage, the center operating frequency of the transmissive unit cell may lie in the Ku frequency band. Accordingly, the active dual-frequency liquid crystal transmission and reflection array structure of the disclosure may respond to various communication requirements.

### BRIEF DESCRIPTION OF THE DRAWINGS

FIG. 1A is a schematic diagram of a multi-layered structure of an active dual-frequency liquid crystal transmission and reflection array structure according to an embodiment of the disclosure.
FIG. 1B is a cross-sectional diagram of an active dual-frequency liquid crystal transmission and reflection array structure according to an embodiment of the disclosure.
FIG. 2A is a schematic diagram of a cell design of a first surface unit according to an embodiment of the disclosure.
FIG. 2B is a schematic diagram of a cell design of a second surface unit according to an embodiment of the disclosure.
FIG. 2C is a schematic diagram of a cell design of a third surface unit according to an embodiment of the disclosure.
FIG. 2D is a schematic diagram of a cell design of a fourth surface unit according to an embodiment of the disclosure.
FIG. 3A is a schematic diagram of a structure of a reflective unit cell according to an embodiment of the disclosure.
FIG. 3B is a schematic diagram of a reflection coefficient value and a phase change before a reflective unit cell is applied with a bias voltage according to an embodiment of the disclosure.
FIG. 3C is a schematic diagram of performance before an upper liquid crystal and a lower liquid crystal of a reflective unit cell are applied with a bias voltage according to an embodiment of the disclosure.
FIG. 4A is a schematic diagram of a structure of a transmissive unit cell according to an embodiment of the disclosure.
FIG. 4B is a schematic diagram of a transmission coefficient value and a phase change after a transmissive unit cell is applied with a bias voltage according to an embodiment of the disclosure.
FIG. 4C is a schematic diagram of performance after an upper liquid crystal and a lower liquid crystal of a transmissive unit cell are applied with a bias voltage according to an embodiment of the disclosure.
FIG. 5A is a schematic diagram of phase distribution required for phase compensation of a reflective unit cell according to an embodiment of the disclosure.
FIG. 5B is a schematic diagram of phase distribution required for phase compensation of a transmissive unit cell according to an embodiment of the disclosure.
FIG. 6A is a schematic diagram of an architecture of a reflection array according to a first embodiment of the disclosure.
FIG. 6B is a polar coordinate diagram of a realized gain before a reflection array is applied with a bias voltage according to a first embodiment of the disclosure.
FIG. 6C is a realized gain diagram before a reflection array is applied with a bias voltage according to a first embodiment of the disclosure.
FIG. 7A is a schematic diagram of an architecture of a reflection array according to a second embodiment of the disclosure.
FIG. 7B is a polar coordinate diagram of a realized gain before a reflection array is applied with a bias voltage according to a second embodiment of the disclosure.
FIG. 7C is a realized gain diagram before a reflection array is applied with a bias voltage according to a second embodiment of the disclosure.
FIG. 8A is a schematic diagram of an architecture of a transmission array according to a third embodiment of the disclosure.
FIG. 8B is a polar coordinate diagram of a realized gain after a transmission array is applied with a bias voltage according to a third embodiment of the disclosure.
FIG. 8C is a realized gain diagram after a transmission array is applied with a bias voltage according to a third embodiment of the disclosure.
FIG. 9A is a schematic diagram of an architecture of a transmission array according to a fourth embodiment of the disclosure.
FIG. 9B is a polar coordinate diagram of a realized gain after a transmission array is applied with a bias voltage according to a fourth embodiment of the disclosure.
FIG. 9C is a realized gain diagram after a transmission array is applied with a bias voltage according to a fourth embodiment of the disclosure.
FIG. 10A is a schematic diagram of an architecture of a transmission array according to a fifth embodiment of the disclosure.
FIG. 10B is a polar coordinate diagram of a realized gain after a transmission array is applied with a bias voltage according to a fifth embodiment of the disclosure.
FIG. 10C is a realized gain diagram after a transmission array is applied with a bias voltage according to a fifth embodiment of the disclosure.

### DESCRIPTION OF THE EMBODIMENTS

Reference is now made in detail to exemplary embodiments of the disclosure, examples of the exemplary embodiments are illustrated in the accompanying drawings. Wherever possible, the same reference numerals are used in the drawings and the description to refer to the same or like parts.

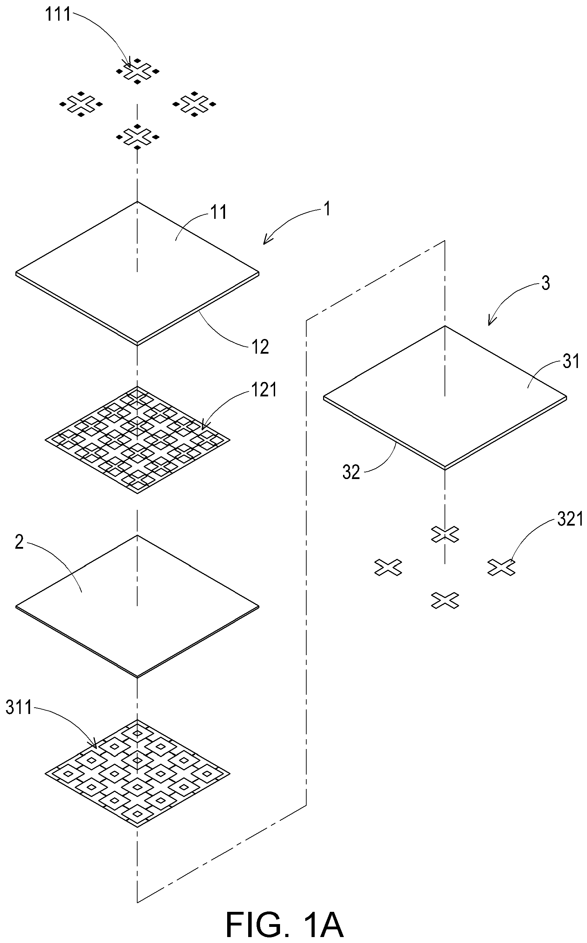

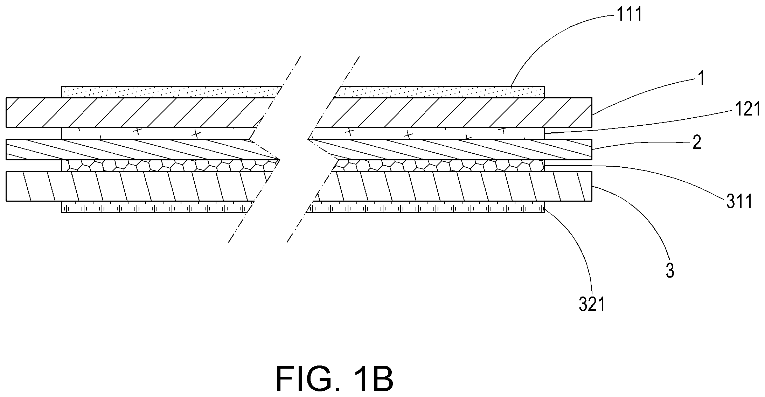

FIG. 1A is a schematic diagram of a multi-layered structure of an active dual-frequency liquid crystal transmission and reflection array structure according to an embodiment of the disclosure. FIG. 1B is a cross-sectional diagram of an active dual-frequency liquid crystal transmission and reflection array structure according to an embodiment of the disclosure. Referring to FIG. 1A and FIG. 1B, a design of the active dual-frequency liquid crystal transmission and reflection array structure is mainly a two-layered and four-surface circuit board. The active dual-frequency liquid crystal transmission and reflection array structure includes a first substrate layer 1, a first liquid crystal layer 2, a second substrate layer 3, a first surface unit 111, a second surface unit 121, a third surface unit 311, and a fourth surface unit 321. The first substrate layer 1 has a first upper surface 11 and a first lower surface 12. The second substrate layer 3 has a second upper surface 31 and a second lower surface 32. A number of the first surface units 111, a number of the second surface units 121, a number of the third surface units 311, and a number of the fourth surface units 321 may be, for example, N*N, where N is a positive integer greater than 1.

The first liquid crystal layer 2 is stacked and connected between the first substrate layer 1 and the second substrate layer 3. The first surface units 111 are arranged in an array on the first upper surface 11. The second surface units 121 are arranged in an array on the first lower surface 12. The third surface units 311 are arranged in an array on the second upper surface 31. The fourth surface units 321 are arranged in an array on the second lower surface 32.

The first substrate layer 1 and the second substrate layer 3 may be, for example, highfrequency printed circuit boards. In an embodiment, a dielectric constant of the first substrate layer 1 and a dielectric constant of the second substrate layer 3 may be, for example, 3.25 to 3.41, a tangent loss of the first substrate layer 1 and a tangent of the second substrate layer 3 may be, for example, 0.002 to 0.0025, and a copper foil thickness of the first substrate layer 1 and a copper foil thickness of the second substrate layer 3 may be, for example, 0.017 mm to 0.018 mm. Additionally, the first surface unit 111, the second surface unit 121, the third surface unit 311, and the fourth surface unit 321 may be, for example, formed by metal materials (for example, metal conductors such as a copper foil, a gold foil, or other metal oxide conductors such as an indium tin oxide). A copper foil thickness of the first surface unit 111, a copper foil thickness of the second surface unit 121, a copper foil thickness of the third surface unit 311, and a copper foil thickness of the fourth surface unit 321 may be, for example, 0.035 mm.

A liquid crystal material used for the first liquid crystal layer 2 may be, for example, JNC ZOC-A018XX, with a thickness of 0.1 mm. Before and after the first liquid crystal layer 2 is applied with a bias voltage, a dielectric constant of the first liquid crystal layer 2 may be, for example, 2.55 to 3.76, and a tangent loss thereof may be, for example, 0.004 to 0.006. For example, before the first liquid crystal layer 2 is applied with a bias voltage (0V), a liquid crystal alignment direction of the first liquid crystal layer 2 is parallel to an electric field direction, and the dielectric constant of the first liquid crystal layer 2 is 2.55, and a tangent loss thereof is 0.006. In another aspect, after the first liquid crystal layer 2 is applied with a bias voltage (for example, 5V to 20V), the liquid crystal alignment direction of the first liquid crystal layer 2 is perpendicular to the electric field, the dielectric constant thereof becomes 3.76, and the tangent loss thereof becomes 0.004.

Types of the first substrate layer 1, the second substrate layer 3, and the first liquid crystal layer 2 may be designed according to actual requirements, and the disclosure is not limited thereto.

It should be noted that the first liquid crystal layer 2 is disposed between the first substrate layer 1 and the second substrate layer 3. In order to apply a bias voltage to the first liquid crystal layer 2, peripheral edges of both the first substrate layer 1 and the second substrate layer 3 are designed as metal edges. Therefore, when the metal edges of the first substrate layer 1 and the second substrate layer 3 are respectively applied with a bias voltage, a voltage difference may be created above and below the first liquid crystal layer 2, so that the first liquid crystal layer 2 is applied with the bias voltage. This method is a conventional technical means well known to those skilled in the art, so the peripheral edges of the first substrate layer 1 and the second substrate layer 3 are not specifically marked as metal edges in the drawings.

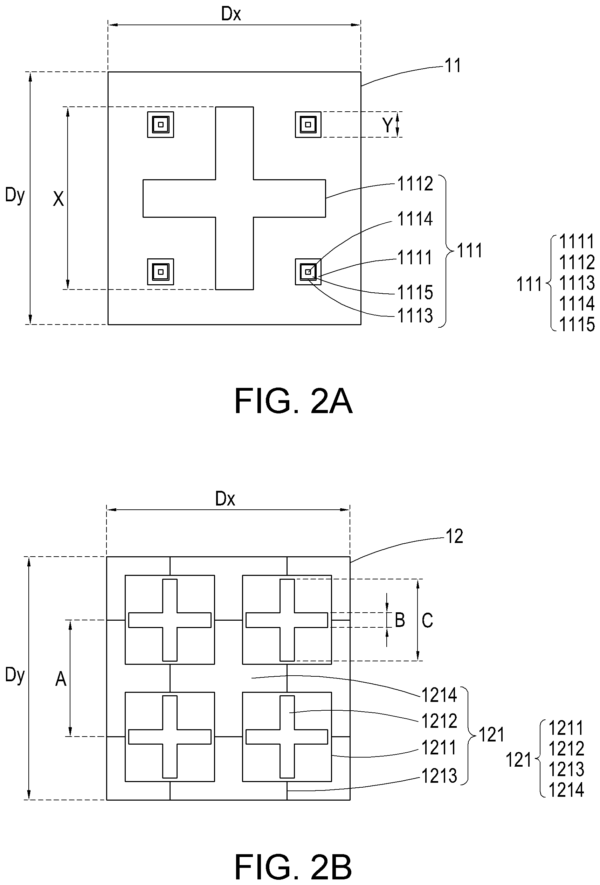

FIG. 2A is a schematic diagram of a cell design of a first surface unit according to an embodiment of the disclosure. Referring to FIG. 2A, the first surface unit 111 is located in a rectangle unit included in the first upper surface 11. For example, both Dₓ and D_{y} indicated in FIG. 2A are 8 mm, and the first surface unit 111 is located in a rectangle unit with both length and width of 8 mm included in the first upper surface 11. Further, the original metal layer (for example, a copper foil) of the first upper surface 11 may be etched based on the rectangle unit with the length and the width of 8 mm to form the first surface unit 111.

The first surface unit 111 includes four first surface outer frame patches 1111 and a first surface cross-shaped patch 1112. The four first surface outer frame patches 1111 are respectively arranged around the first surface cross-shaped patch 1112. Each of the first surface outer frame patches 1111 has a first surface inner frame patch 1115 therein. Each first surface outer frame patch 1111 and the corresponding first surface inner frame patch 1115 have a first surface rectangle slit 1113 therebetween, and a center of each first surface inner frame patch 1115 has a first surface rectangle slot 1114.

The first surface outer frame patch 1111 has a length and a width of Y as indicated in FIG. 2A. The first surface cross-shaped patch 1112 has a first longitudinal part and a first lateral part, and a length of the first longitudinal part and a length the first lateral part are X as indicated in FIG. 2A.

In an embodiment, the length and the width (as indicated by Y in FIG. 2A) of the first surface outer frame patch 1111 may be, for example, 0.5 mm to 3.3 mm, the length (as indicated by X in FIG. 2A) of the first longitudinal part and the length (as indicated by X in FIG. 2A) of the first lateral part of the first surface cross-shaped patch 1112 may be, for example, 1.5 mm to 8.5 mm, a length and a width of the first surface rectangle slit 1113 may be, for example, 0.05 mm to 0.33 mm, a length and a width of the first surface rectangle slot 1114 may be, for example, 0.25 mm to 1.65 mm, and a length and a width of the first surface inner frame patch 1115 may be, for example, 0.35 mm to 2.31 mm.

FIG. 2B is a schematic diagram of a cell design of a second surface unit according to an embodiment of the disclosure. Referring to FIG. 2B, the second surface unit 121 is located in a rectangle unit included in the first lower surface 12. For example, both Dₓ and D_{y} indicated in FIG. 2B are 8 mm, and the first surface unit 121 is located in a rectangle unit with both length and width of 8 mm included in the lower upper surface 12. Further, the original metal layer (for example, a copper foil) of the first lower surface 12 may be etched based on the rectangle unit with the length and the width of 8 mm to form the second surface unit 121.

The second surface unit 121 includes four second surface rectangle patches 1211, multiple second surface metal lines 1213 connected to edges of the four second surface rectangle patches 1211, and a second surface cross-shaped slot 1212 located at a center of each second surface rectangle patch 1211. As shown in FIG. 2B, an edge of each of the second surface rectangle patches 1211 is connected to four second surface metal lines 1213. The aforementioned four second surface rectangle patches 1211 and the second surface metal lines 1213 may, for example, surround a second surface cross-shaped opening 1214.

It should be noted that a position of the second surface cross-shaped slot 1212 corresponds to a position of the first surface rectangle slot 1114, and a position of the second surface cross-shaped opening 1214 corresponds to a position of the first surface cross-shaped patch 1112.

The second surface cross-shaped slot 1212 has a second longitudinal part and a second lateral part, and a width and a length of the second longitudinal part and a width and a length of the second lateral part are B and C as indicated in FIG. 2B, respectively. The second surface cross-shaped opening 1214 has a third longitudinal part and a third lateral part, and a length of the third longitudinal part and a length of the third lateral part are A as indicated in FIG. 2B.

In an embodiment, a length and a width of the second surface rectangle patch 1211 may be, for example, 3.9 mm to 4.1 mm, the width (as indicated by B in FIG. 2B) and the length (as indicated by C in FIG. 2B) of the second longitudinal part and the width (as indicated by B in FIG. 2B) and the length (as indicated by C in FIG. 2B) of the second lateral part of the second surface cross-shaped slot 1212 may be, for example, 0.57 mm to 0.67 mm and 3.25 mm to 3.35 mm, respectively, the length of the second surface metal line 1213 may be, for example, 0.3 mm to 0.35 mm, and the length (as indicated by A in FIG. 2B) of the third longitudinal part and the length (as indicated by A in FIG. 2B) of the third lateral part of the second surface cross-shaped opening 1214 may be, for example, 4.55 mm to 4.62 mm.

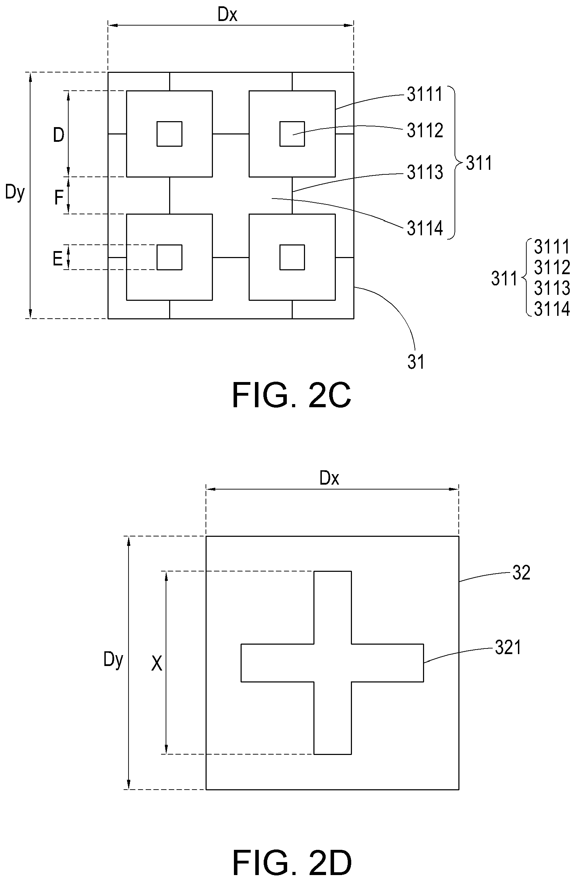

FIG. 2C is a schematic diagram of a cell design of a third surface unit according to an embodiment of the disclosure. Referring to FIG. 2C, the third surface unit 311 is located in a rectangle unit included in the second upper surface 31. For example, both Dₓ and D_{y} indicated in FIG. 2C are 8 mm, and the third surface unit 311 is located in a rectangle unit with both length and width of 8 mm included in the second upper surface 31. Further, the original metal layer (for example, a copper foil) of the second upper surface 31 may be etched based on the rectangle unit with the length and the width of 8 mm to form the third surface unit 311.

The third surface unit 311 includes four third surface rectangle patches 3111, multiple third surface metal lines 3113 connected to edges of the four third surface rectangle patches 3111, and a third surface square slot 3112 located at a center of each of the third surface rectangle patches 3111. The aforementioned four third surface rectangle patches 3111 and the third surface metal lines 3113 may, for example, surround a third surface cross-shaped opening 3114. The third surface cross-shaped opening 3114 has a fourth longitudinal part and a fourth lateral part.

It should be noted that a position of the third surface rectangle patch 3111 corresponds to a position of the second surface rectangle patch 1211, a position of the third surface square slot 3112 corresponds to a position of the second surface cross-shaped slot 1212, and a position of the third surface cross-shaped opening 3114 corresponds to a position of the second surface cross-shaped opening 1214.

In an embodiment, a length and a width (as indicated by D in FIG. 2C) of the third surface rectangle patch 3111 may be, for example, 2.95 mm to 3.05 mm, a length and a width (as indicated by E in FIG. 2C) of the third surface square slot 3112 may be, for example, 0.85 mm to 0.95 mm, a length (as indicated by F in FIG. 2C) of the third surface metal line 3113 may be, for example, 1.6 mm to 1.7 mm, and a length and a width of the fourth longitudinal part and a length and a width the fourth lateral part of the third surface cross-shaped opening 3114 may be, for example, 1.6 mm to 1.7 mm.

FIG. 2D is a schematic diagram of a cell design of a fourth surface unit according to an embodiment of the disclosure. Referring to FIG. 2D, the fourth surface unit 321 is located in a rectangle unit included in the second lower surface 32. For example, both Dₓ and D_{y} indicated in FIG. 2D are 8 mm, and the fourth surface unit 321 is located in a rectangle unit with both length and width of 8 mm included in the second lower surface 32. Further, the original metal layer (for example, a copper foil) of the second lower surface 32 may be etched based on the rectangle unit with the length and the width of 8 mm to form the fourth surface unit 321.

The fourth surface unit 321 may be, for example, a surface cross-shaped patch (also referred to as a fourth surface cross-shaped patch). The fourth surface unit 321 has a fifth longitudinal part and a fifth lateral part, and a length of the fifth longitudinal part and a length of the fifth lateral part is X as indicated in FIG. 2D.

It should be noted that a position of the fourth surface patch 321 corresponds to a position of the third surface cross-shaped opening 3114.

In an embodiment, the length and the width (as indicated by X in FIG. 2D) of the fifth longitudinal part and the length and the width (as indicated by X in FIG. 2D) of the fifth lateral part of the fourth surface unit 321 (the fourth surface cross-shaped patch) may be, for example, 1.5 mm to 8.5 mm.

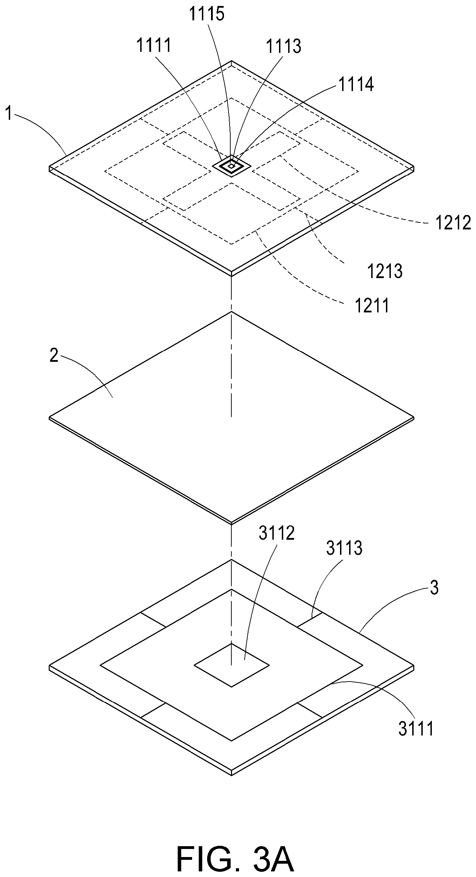

FIG. 3A is a schematic diagram of a structure of a reflective unit cell according to an embodiment of the disclosure. Referring to FIG. 3A, the first substrate layer 1, the first liquid crystal layer 2, and the second substrate layer 3 are stacked to form an active dual-frequency liquid crystal transmission and reflection array structure. In the case where the dual patches (that is, the first surface cross-shaped patch 1112 and the fourth surface cross-shaped patch 321) correspond to each other, a transmission response generates a great broadband effect, thereby keeping an S11 parameter and an S21 parameter stable.

Specifically, the S11 parameter is also referred to as an input reflection coefficient, which is configured to indicate a return loss at a signal transmission end. The S21 parameter is also referred to as a forward transmission coefficient, which is configured to indicate an insertion loss from the signal transmission end to a signal reception end. The S11 parameter and the S21 parameter are related to a size of each component in the active dual-frequency liquid crystal transmission and reflection array structure. In detail, patch sizes of the first surface cross-shaped patch 1112 and the fourth surface cross-shaped patch 321, that is, X and Y shown in FIG. 2A and FIG. 2D, are related to angles of the transmission phase and reflection phase of the active dual-frequency liquid crystal transmission and reflection array structure. A slot size of the second surface cross-shaped slot 1212, that is, B and C shown in FIG. 2B, are respectively related to the bandwidth size and center operating frequency of the active dual-frequency liquid crystal transmission and reflection array structure.

Referring to FIG. 3A, the reflective unit cell is formed by a first part of the active dual-frequency liquid crystal transmission and reflection array structure, and a structure thereof is a design of a two-layered substrate. A size of the reflective unit cell may be, for example, 4.7 mm. Specifically, the reflective unit cell is formed by the first surface outer frame patch 1111, the first surface inner frame patch 1115, the first substrate layer 1, the second surface rectangle patch 1211, the second surface metal line 1213, the first liquid crystal layer 2, the second substrate layer 3, the third surface rectangle patch 3111, and the third surface metal line 3113.

When the first liquid crystal layer 2 is not applied with a bias voltage, the center operating frequency of the active dual-frequency liquid crystal transmission and reflection array structure may be, for example, in a first frequency band. Specifically, when the first liquid crystal layer 2 is not applied with the bias voltage, the reflective unit cell is used as a reflection surface, and the center operating frequency of the reflective unit cell is in the first frequency band, where the first frequency band may be, for example, 27 GHz to 29 GHz. That is, when the first liquid crystal layer 2 is not applied with the bias voltage, the reflective unit cell may be, for example, used as a reflection surface with a center operating frequency located in the Ka-band to meet a requirement of 5G mm wave communication.

It should be noted that the first frequency band is related to the size of the reflective unit cell.

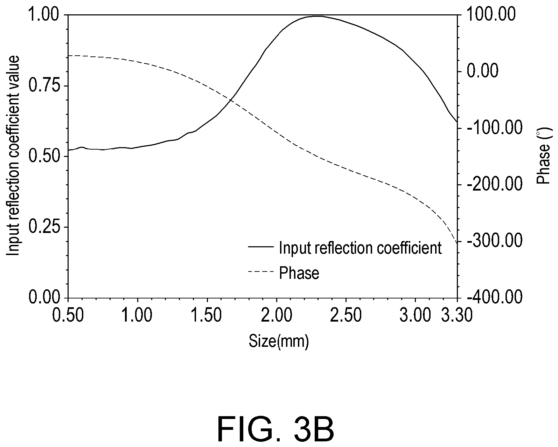

FIG. 3B is a schematic diagram of a reflection coefficient value (that is, the S11 parameter) and a phase change before a reflective unit cell is applied with a bias voltage according to an embodiment of the disclosure. Referring to FIG. 3B, a solid curve is used to represent the reflection coefficient, a dashed curve is used to represent the phase change, a horizontal axis is the size (Y as shown in FIG. 2A and FIG. 2D) of the patch, a left vertical axis is the reflection coefficient value, and a right vertical axis is a magnitude of a phase. As shown in FIG. 3B, before the first liquid crystal layer 2 is applied with the bias voltage, an average value of the reflection coefficient value of the reflective unit cell is approximately 0.75, and the phase change reaches 335°, which meets a performance standard of the reflection array design.

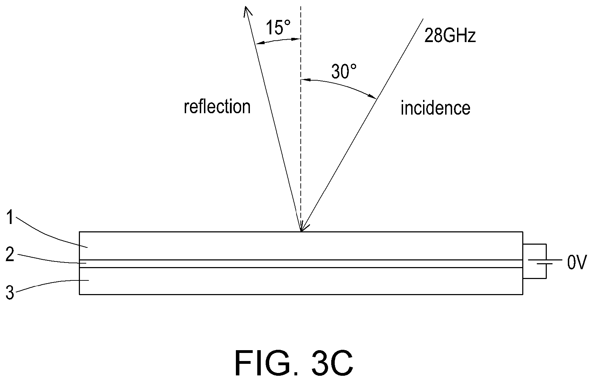

FIG. 3C is a schematic diagram of performance before an upper lower liquid crystal and a lower liquid crystal of a reflective unit cell are applied with a bias voltage according to an embodiment of the disclosure. Referring to FIG. 3C, when the first liquid crystal layer 2 is not applied with the bias voltage, the active dual-frequency liquid crystal transmission and reflection array structure may, for example, reflect a plane electromagnetic wave with a frequency of 28 GHz based on an incidence angle of 30°and focus the plane electromagnetic wave at a position of an angle of 15° after reflection, where an incidence angle and a reflection angle may both be designed according to actual requirements, and the disclosure is not limited thereto.

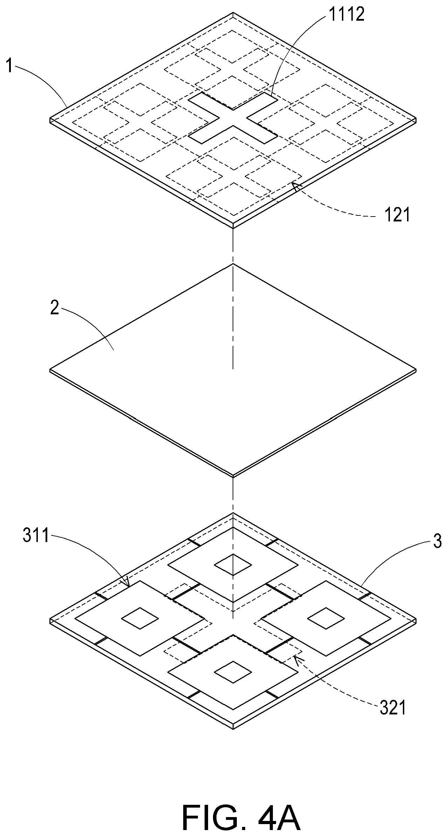

FIG. 4A is a schematic diagram of a structure of a transmissive unit cell according to an embodiment of the disclosure. Referring to FIG. 4A, the transmissive unit cell is formed by a second part of the active dual-frequency liquid crystal transmission and reflection array structure, and a structure thereof is a design of a two-layered substrate. A size of the transmissive unit cell may be, for example, 9.4 mm. Specifically, the transmissive unit cell is formed by the first surface cross-shaped patch 1112, the first substrate layer 1, the second surface unit 121, the first liquid crystal layer 2, the third surface unit 311, the second substrate layer 3, and the fourth surface unit 321.

When the first liquid crystal layer 2 is applied with a bias voltage, the center operating frequency of the active dual-frequency liquid crystal transmission and reflection array structure may be, for example, in a second frequency band. Specifically, when the first liquid crystal layer 2 is applied with the bias voltage, the transmissive unit cell is used as a transmission surface, and the center operating frequency of the transmissive unit cell is in the second frequency band, where the second frequency band may be, for example, 17 GHz to 19 GHz. That is, when the first liquid crystal layer 2 is applied with the bias voltage, the transmissive unit cell may be, for example, used as a transmission surface with a center operating frequency located in the Ku-band to meet a requirement of low earth orbit satellite communication.

It should be noted that the second frequency band is related to the size of the transmissive unit cell.

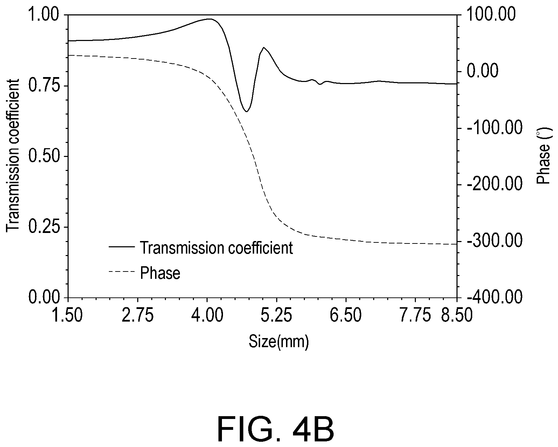

FIG. 4B is a schematic diagram of a transmission coefficient value (that is, the S21 parameter) and a phase change after a transmissive unit cell is applied with a bias voltage according to an embodiment of the disclosure. Referring to FIG. 4B, a solid curve is configured to represent the transmission coefficient, a dashed curve is used to represent the phase change, a horizontal axis is the size (X as shown in FIG. 2A and FIG. 2D) of the patch, a left vertical axis is the transmission coefficient value, and a right vertical axis is a magnitude of a phase. As shown in FIG. 4B, after the first liquid crystal layer 2 is applied with the bias voltage, an average value of the transmission coefficient value of the transmissive unit cell is approximately 0.85, and the phase change reaches 335°, which meets a performance standard of the transmission array design.

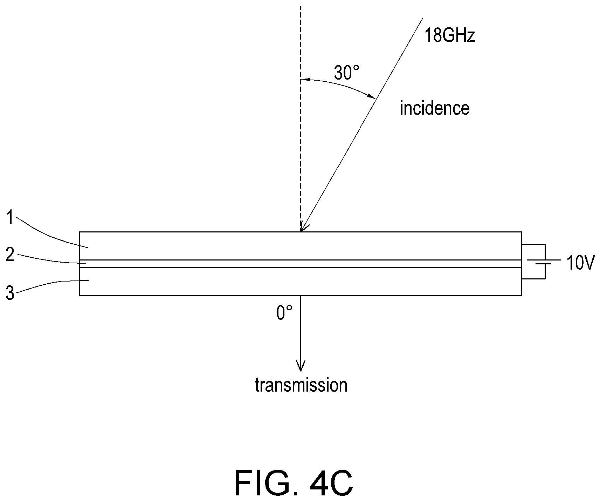

FIG. 4C is a schematic diagram of performance after an upper liquid crystal and a lower liquid crystal of a transmissive unit cell are applied with a bias voltage according to an embodiment of the disclosure. Referring to FIG. 4C, when the first liquid crystal layer 2 is applied with the bias voltage, the active dual-frequency liquid crystal transmission and reflection array structure may, for example, transmit a plane electromagnetic wave with a frequency of 18 GHz based on an incidence angle of 30°and focus the plane electromagnetic wave at a position of 0° after transmission, where an incidence angle and a transmission angle may both be designed according to actual requirements, and the disclosure is not limited thereto.

After the design of the reflective unit cell (for example, the reflective unit cell shown in FIG. 3A) and the transmissive unit cell (for example, the transmissive unit cell shown in FIG. 4A) is completed, the phase required for phase compensation of the reflective unit cell and the transmissive unit cell may be determined.

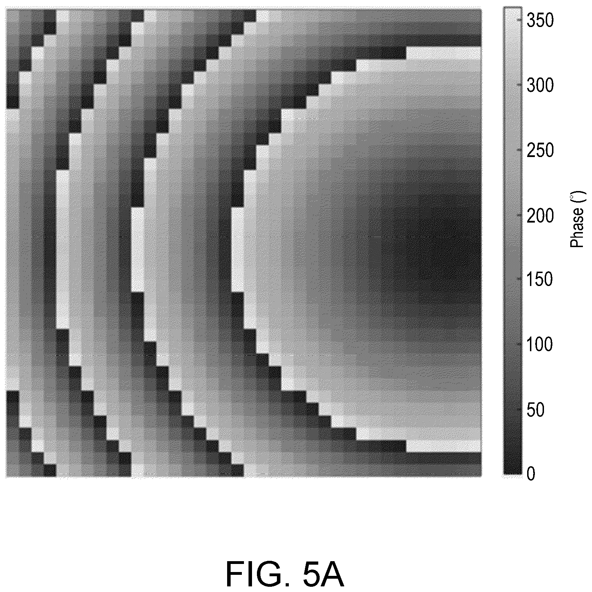

FIG. 5A is a schematic diagram of phase distribution required for phase compensation of a reflective unit cell according to an embodiment of the disclosure. Referring to FIG. 5A, it is shown that the schematic diagram of the phase distribution required for phase compensation is calculated based on a setting (that is, based on the setting of FIG. 3C) where a plane electromagnetic wave with a frequency of 28 GHz is incident at the incidence angle of 30° and reflected at the reflection angle of 15°.

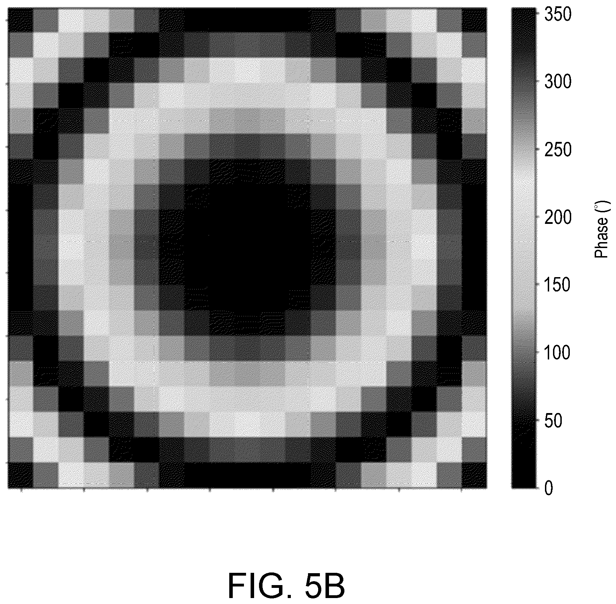

FIG. 5B is a schematic diagram of phase distribution required for phase compensation of a transmissive unit cell according to an embodiment of the disclosure. Referring to FIG. 5B, it is shown that the schematic diagram of the phase distribution required for phase compensation calculated based on a setting where a plane electromagnetic wave with a frequency of 18 GHz is incident at an angle of 0° and transmitted at an angle of 0°.

It should be noted that the aforementioned phase required for phase compensation is, for example, calculated through formulas and/or algorithms well known to those skilled in the art, and therefore is not repeated here.

After the distribution schematic diagrams of the phase required for phase compensation as shown in FIG. 5A and FIG. 5B are obtained, the active dual-frequency liquid crystal transmission and reflection array structure may be arranged. Specifically, the active dual-frequency liquid crystal transmission and reflection array structure may be arranged with reflective unit cells and transmissive unit cells as units. That is, the active dual-frequency liquid crystal transmission and reflection array structure may be obtained by arranging multiple reflective unit cells and multiple transmissive unit cells, where the reflective unit cells may be arranged into a reflection array, and the transmissive unit cells may be arranged into a transmission array.

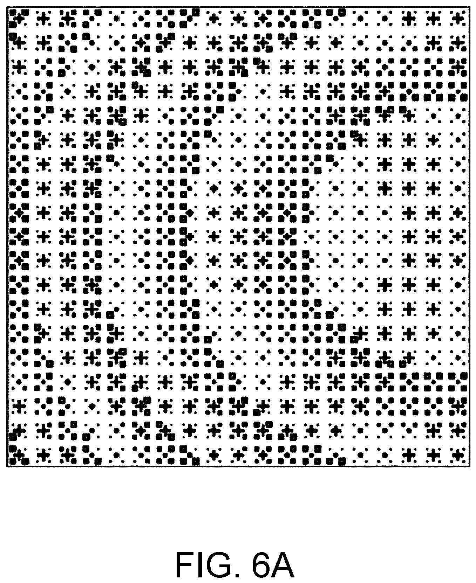

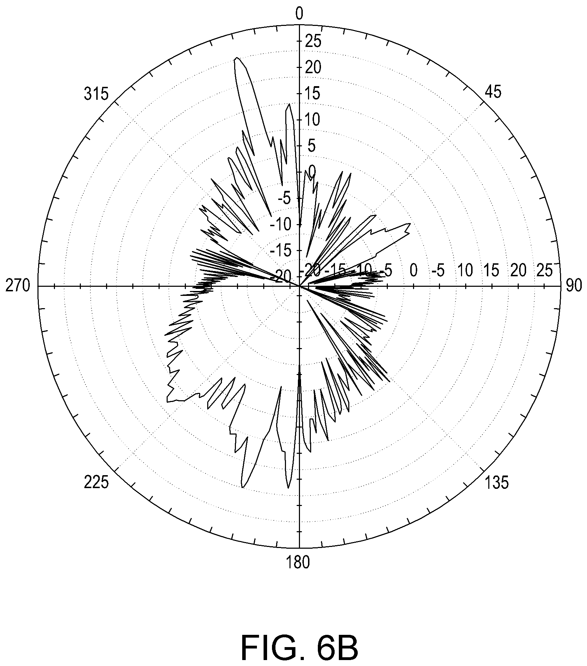

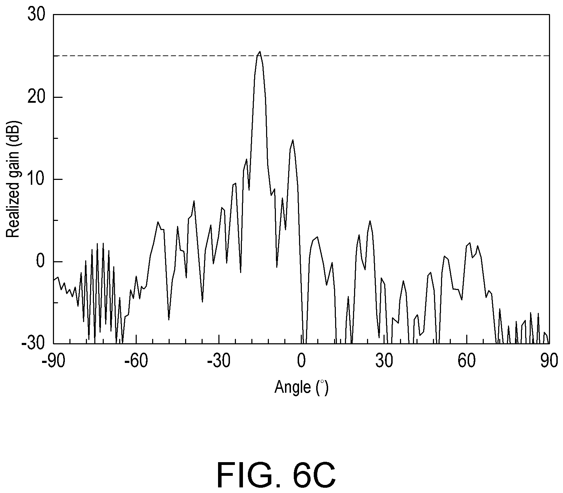

FIG. 6A is a schematic diagram of architecture of a reflection array according to a first embodiment of the disclosure. FIG. 6B is a polar coordinate diagram of a realized gain before a reflection array is applied with a bias voltage according to a first embodiment of the disclosure. FIG. 6C is a realized gain diagram before a reflection array is applied with a bias voltage according to a first embodiment of the disclosure. Referring to FIG. 6A to FIG. 6C, the reflection array of FIG. 6A is arranged by the reflective unit cells (for example, the reflective unit cell shown in FIG. 3A, whose reflection coefficient value has an average of approximately 0.75, and the phase change reaches 335°), and is designed with a selected incident angle of 30° and reflection angle of 15°. Since the wavelength of 28 GHz electromagnetic wave is shorter than the wavelength 18 GHz electromagnetic wave, small unit cells (that is, the reflective unit cell shown in FIG. 3A) are targeted as the incident object during incidence. In this embodiment, when the electromagnetic wave of 28 GHz is incident, the polar coordinate diagram of the realized gain of the effective patch unit may be as shown in FIG. 6B. Additionally, as shown in FIG. 6C, the realized gain of the reflection array with the incident angle of 30° and the reflection angle of 15° is 25.7dB, and the side-lobe level is approximately 10.7dB. Thereby, it may be known that the reflection array of FIG. 6A has the characteristic of reflection phase beam scanning in the 5G mm wave communication frequency band of 28 GHz (Ka frequency band).

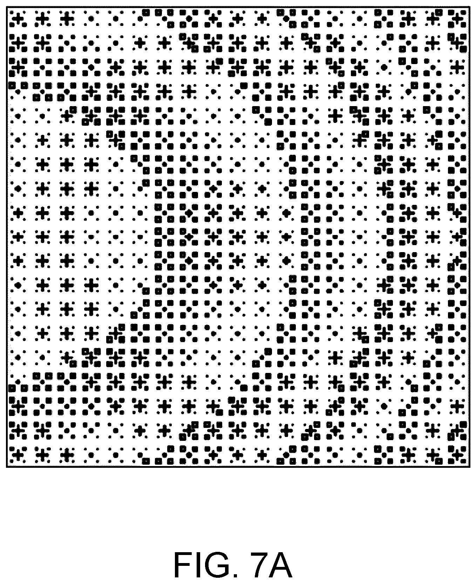

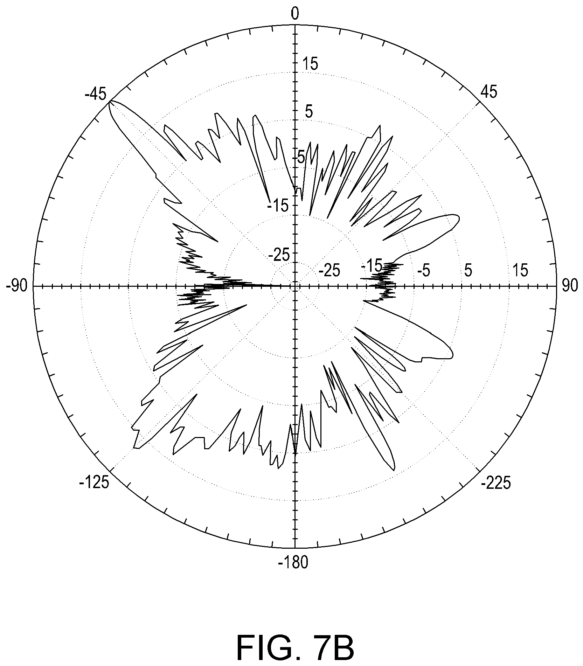

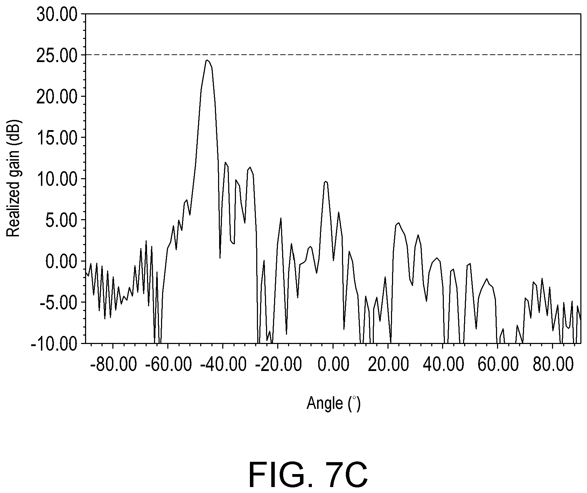

FIG. 7A is a schematic diagram of an architecture of a reflection array according to a second embodiment of the disclosure. FIG. 7B is a polar coordinate diagram of a realized gain before a reflection array is applied with a bias voltage according to a second embodiment of the disclosure. FIG. 7C is a realized gain diagram before a reflection array is applied with a bias voltage according to a second embodiment of the disclosure. Referring to FIG. 7A to FIG. 7C, the reflection array of FIG. 7A is arranged by the reflective unit cells (for example, the reflective unit cell shown in FIG. 3A, whose reflection coefficient value has an average of approximately 0.75, and the phase change reaches 335°), and is designed with a selected incident angle of 30° and reflection angle of 45°. Since the wavelength of 28 GHz electromagnetic wave is shorter than the wavelength of 18 GHz electromagnetic wave, small unit cells (that is, the reflective unit cell shown in FIG. 3A) are targeted as the incident object during incidence. In this embodiment, when 28 GHz electromagnetic wave is incident, the polar coordinate diagram of the realized gain of the effective patch unit may be as shown in FIG. 7B. Additionally, as shown in FIG. 7C, the realized gain of the reflection array with the incident angle of 30° and the reflection angle of 45°is 24.5dB, and the side-lobe level is approximately 12.3dB. Thereby, it may be known that the reflection array of FIG. 7A has the characteristic of reflection phase beam scanning in the 5G mm wave communication frequency band of 28 GHz (Ka frequency band).

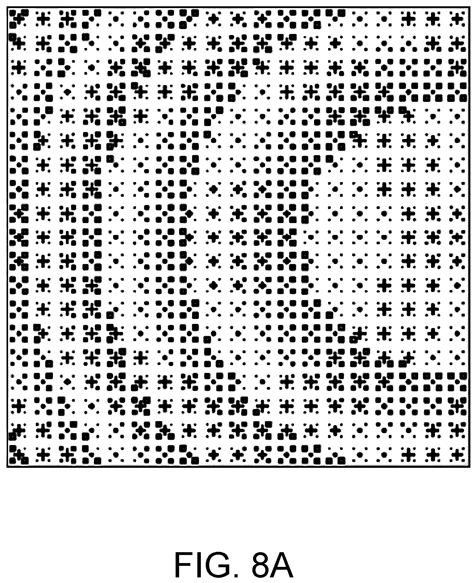

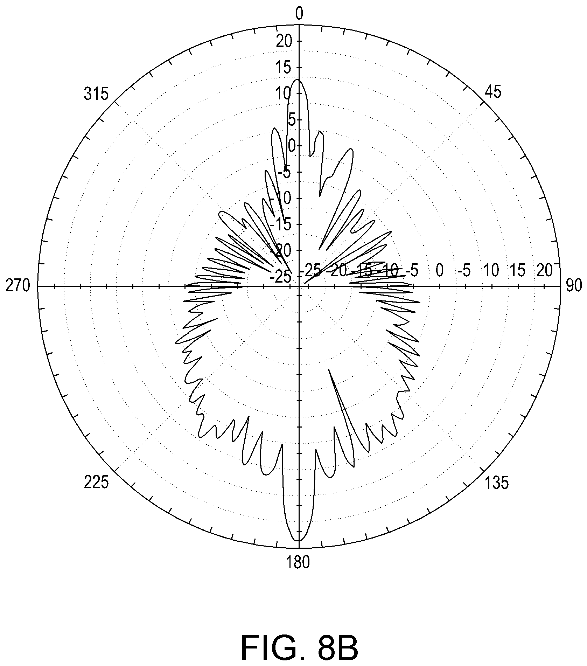

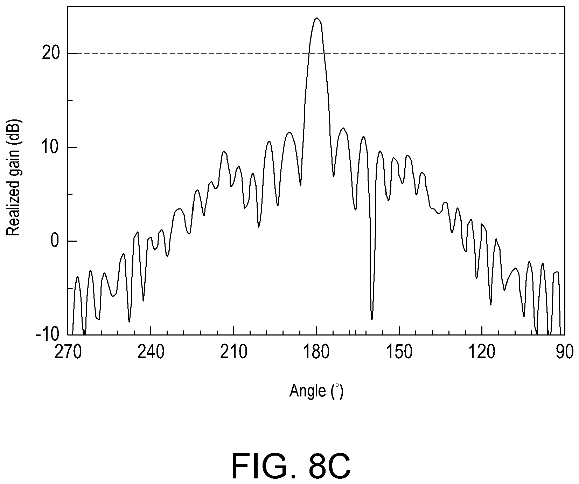

FIG. 8A is a schematic diagram of an architecture of a transmission array according to a third embodiment of the disclosure. FIG. 8B is a polar coordinate diagram of a realized gain after a transmission array is applied with a bias voltage according to a third embodiment of the disclosure. FIG. 8C is a realized gain diagram after a transmission array is applied with a bias voltage according to a third embodiment of the disclosure. Referring to FIG. 8A to FIG. 8C, the transmission array of FIG. 8A is arranged by the transmissive unit cells (for example, the transmissive unit cell shown in FIG. 4A, whose transmission coefficient value has an average of approximately 0.85, and the phase change reaches 335°), and is designed with a selected incident angle of 0° and transmission angle of 0°. Since the wavelength of 18 GHz electromagnetic wave is longer than the wavelength 28 GHz electromagnetic wave, large unit cells (that is, the transmissive unit cell shown in FIG. 4A) are targeted as the incident object during incidence. In this embodiment, when 18 GHz electromagnetic wave is incident, the polar coordinate diagram of the realized gain of the effective patch unit may be as shown in FIG. 8B. Additionally, as shown in FIG. 8C, the realized gain of the transmission array with incident angle of 0° and transmission angle of 0° is 23.8dB, and the side-lobe level is approximately 11.8dB. Thereby, it may be known that the transmission array of FIG. 8A has the characteristic of transmission phase beam scanning in the low earth orbit satellite communication frequency band of 18 GHz (Ku frequency band).

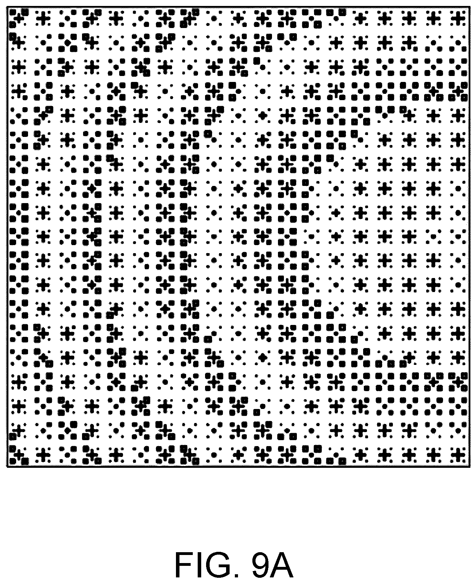

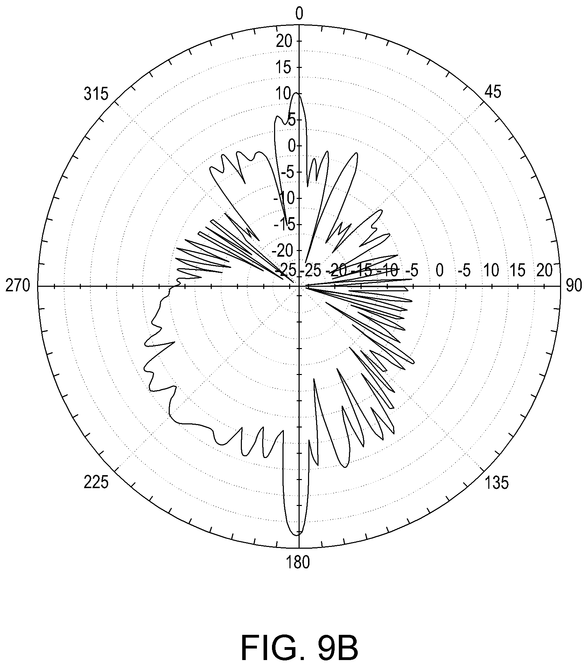

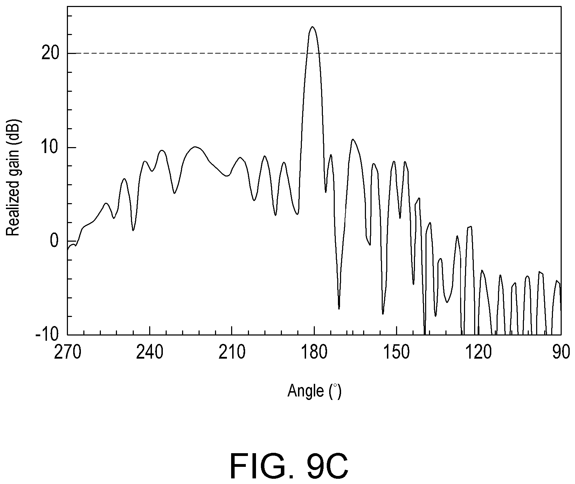

FIG. 9A is a schematic diagram of an architecture of a transmission array according to a fourth embodiment of the disclosure. FIG. 9B is a polar coordinate diagram of a realized gain after a transmission array is applied with a bias voltage according to a fourth embodiment of the disclosure. FIG. 9C shows a realized gain diagram of the transmission array according to the fourth embodiment of the disclosure after bias voltage. Referring to FIG. 9A to FIG. 9C, the transmission array of FIG. 9A is arranged by multiple transmissive unit cells (for example, the transmissive unit cell shown in FIG. 4A, whose transmission coefficient value has an average of approximately 0.85, and the phase change reaches 335°), and is designed with a selected incident angle of 30° and transmission angle of 0°. Since the wavelength of 18 GHz electromagnetic wave is longer than the wavelength of 28 GHz electromagnetic wave, large unit cells (that is, the transmissive unit cell shown in FIG. 4A) are targeted as the incident object during incidence. In this embodiment, when 18 GHz electromagnetic wave is incident, the polar coordinate diagram of the realized gain of the effective patch unit may be as shown in FIG. 9B. Additionally, as shown in FIG. 9C, the realized gain of the transmission array with the incident angle of 30° and the transmission angle of 0° is 22.7dB, and the side-lobe level is approximately 11.9dB. Thereby, it may be known that the transmission array of FIG. 9A has the characteristic of transmission phase beam scanning in the low earth orbit satellite communication frequency band of 18 GHz (Ku frequency band).

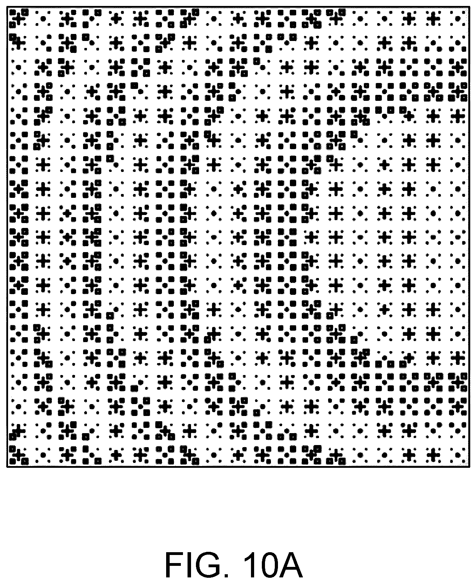

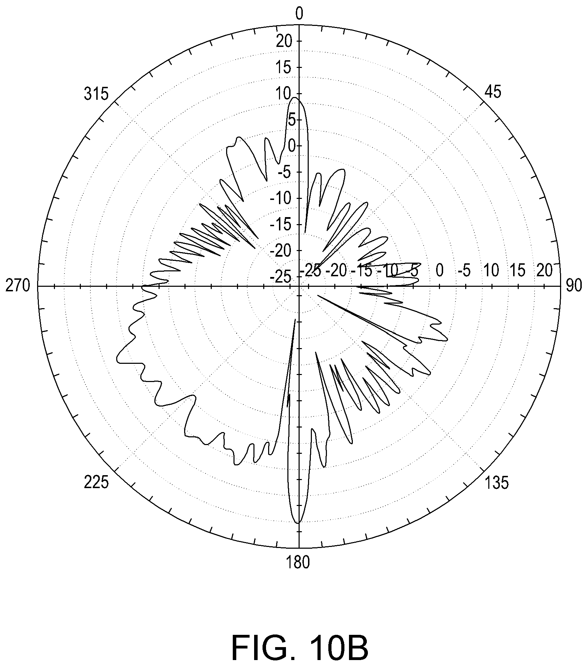

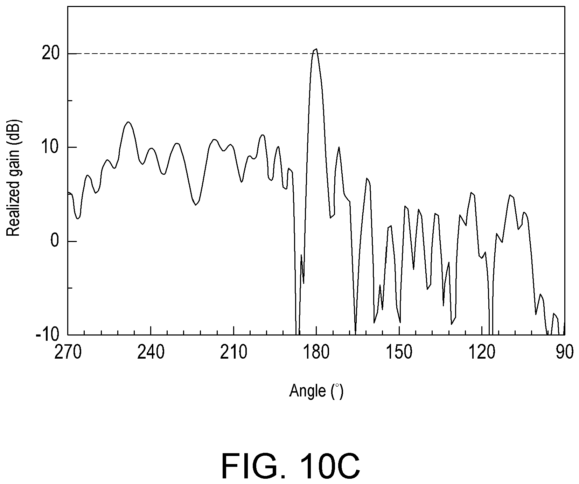

FIG. 10A is a schematic diagram of an architecture of a transmission array according to a fifth embodiment of the disclosure. FIG. 10B is a polar coordinate diagram of a realized gain after a transmission array is applied with a bias voltage according to a fifth embodiment of the disclosure. FIG. 10C is a realized gain diagram after a transmission array is applied with a bias voltage according to a fifth embodiment of the disclosure. Referring to FIG. 10A to FIG. 10C, the transmission array of FIG. 10A is arranged by multiple transmissive unit cells (for example, the transmissive unit cell shown in FIG. 4A, whose transmission coefficient value has an average of approximately 0.85, and the phase change reaches 335°), and is designed with a selected incident angle of 45° and transmission angle of 0°. Since the wavelength of 18 GHz electromagnetic wave is longer than the wavelength 28 GHz electromagnetic wave, large unit cells (that is, the transmissive unit cell shown in FIG. 4A) are targeted as the incident object during incidence. In this embodiment, when 18 GHz electromagnetic wave is incident, the polar coordinate diagram of the realized gain of the effective patch unit may be as shown in FIG. 10B. Additionally, as shown in FIG. 10C, the realized gain of the transmission array with the incident angle of 45° and the transmission angle of 0° is 20.4dB, and the side-lobe level is approximately 10.4dB. Thereby, it may be known that the transmission array of FIG. 10A has the characteristic of transmission phase beam scanning in the low earth orbit satellite communication frequency band of 18 GHz (Ku frequency band).

In summary, the active dual-frequency liquid crystal transmission and reflection array structure provided by the embodiments of the disclosure forms the reflective unit cells and the transmissive unit cells through components on different surface units. In response to the liquid crystal layer not being applied with the bias voltage, the reflective unit cells may be used as reflection surfaces, and the center operating frequency may lie in the Ka frequency band to meet the requirement of 5G mm wave communication. Furthermore, in response to the liquid crystal layer being applied with the bias voltage, the transmissive unit cells may be used as transmission surfaces, and the center operating frequency may lie in the Ku frequency band to meet the requirement of low earth orbit satellite communication.

## Claims

1. An active dual-frequency liquid crystal transmission and reflection array structure, comprising:
a first substrate layer (1), having a first upper surface (11) and a first lower surface (12);
a second substrate layer (3), having a second upper surface (31) and a second lower surface (32);
a first liquid crystal layer (2), stacked and connected between the first substrate layer (1) and the second substrate layer (3);
a first surface unit (111), arranged in an array on the first upper surface (11);
a second surface unit (121), arranged in an array on the first lower surface (12);
a third surface unit (311), arranged in an array on the second upper surface (31); and
a fourth surface unit (321), arranged in an array on the second lower surface (32),
wherein when the first liquid crystal layer (2) is not applied with a bias voltage, and a center operating frequency of the active dual-frequency liquid crystal transmission and reflection array structure lies in a first frequency band,
wherein when the first liquid crystal layer (2) is applied with a bias voltage, the center operating frequency of the active dual-frequency liquid crystal transmission and reflection array structure lies in a second frequency band, and
wherein the first frequency band is higher than the second frequency band.

2. The active dual-frequency liquid crystal transmission and reflection array structure according to claim 1,
wherein the first surface unit (111) comprises four first surface outer frame patches (1111) and a first surface cross-shaped patch (1112),
wherein each of the first surface outer frame patches (1111) has a first surface inner frame patch (1115) therein, and
wherein the four first surface outer frame patches (1111) are respectively arranged around the first surface cross-shaped patch (1112).

3. The active dual-frequency liquid crystal transmission and reflection array structure according to claim 2, wherein the second surface unit (121) comprises four second surface rectangle patches (1211), a plurality of second surface metal lines (1213) connected to edges of the four second surface rectangle patches (1211), and a second surface cross-shaped slot (1212) located at a center of each of the second surface rectangle patches (1211).

4. The active dual-frequency liquid crystal transmission and reflection array structure according to claim 3,
wherein the third surface unit (311) comprises four third surface rectangle patches (3111), a plurality of third surface metal lines (3113) connected to edges of the four third surface rectangle patches (3111), and a third surface square slot (3112) located at a center of each of the third surface rectangle patches (3111).

5. The active dual-frequency liquid crystal transmission and reflection array structure according to claim 4, wherein the fourth surface unit (321) is a fourth surface cross-shaped patch.

6. The active dual-frequency liquid crystal transmission and reflection array structure according to claim 1, wherein the second surface unit (121) comprises four second surface rectangle patches (1211), a plurality of second surface metal lines (1213) connected to edges of the four second surface rectangle patches (1211), and a second surface cross-shaped slot (1212) located at a center of each of the second surface rectangle patches (1211).

7. The active dual-frequency liquid crystal transmission and reflection array structure according to claim 1,
wherein the third surface unit (311) comprises four third surface rectangle patches (3111), a plurality of third surface metal lines (3113) connected to edges of the four third surface rectangle patches (3111), and a third surface square slot (3112) located at a center of each of the third surface rectangle patches (3111).

8. The active dual-frequency liquid crystal transmission and reflection array structure according to claim 1, wherein the fourth surface unit (321) is a fourth surface cross-shaped patch.

9. The active dual-frequency liquid crystal transmission and reflection array structure according to any one of claims 1 to 8,
wherein the first part of the active dual-frequency liquid crystal transmission and reflection array structure is formed by a reflective unit cell, and
wherein when the first liquid crystal layer (2) is not applied with a bias voltage, the reflective unit cell is used as a reflection surface, and a center operating frequency of the reflective unit cell lies in the first frequency band.

10. The active dual-frequency liquid crystal transmission and reflection array structure according to any one of claims 1 to 8, wherein the first part of the active dual-frequency liquid crystal transmission and reflection array structure comprises a first surface outer frame patch (1111) of the first surface unit (111), a first surface inner frame patch (1115) of the first surface unit (111), the first substrate layer (1), a second surface rectangle patch (1211) of the second surface unit (121), a second surface metal line (1213) of the second surface unit (121), the first liquid crystal layer (2), the second substrate layer (3), a third surface rectangle patch (3111) of the third surface unit (311), and a third surface metal line (3113) of the third surface unit (311).

11. The active dual-frequency liquid crystal transmission and reflection array structure according to any one of claims 1 to 8,
wherein a second part of the active dual-frequency liquid crystal transmission and reflection array structure forms a transmissive unit cell, and
wherein when the first liquid crystal layer (2) is applied with a bias voltage, the transmissive unit cell is used as a transmission surface, and a center operating frequency of the transmissive unit cell lies in the second frequency band.

12. The active dual-frequency liquid crystal transmission and reflection array structure according to any one of claims 1 to 8, wherein a second part of the active dual-frequency liquid crystal transmission and reflection array structure comprises a first surface cross-shaped patch (1112) of the first surface unit (111), the first substrate layer (1), the second surface unit (121), the first liquid crystal layer (2), the third surface unit (311), the second substrate layer (3), and the fourth surface unit (321).

13. The active dual-frequency liquid crystal transmission and reflection array structure according to any one of claims 1 to 8, wherein the first surface unit (111), the second surface unit (121), the third surface unit (311), and the fourth surface unit (321) are formed by metal materials.

14. The active dual-frequency liquid crystal transmission and reflection array structure according to any one of claims 1 to 8, wherein before and after the first liquid crystal layer (2) is applied with a bias voltage, a dielectric constant and a tangent loss of the first liquid crystal layer (2) are 2.55 to 3.76 and 0.004 to 0.006, respectively.

15. The active dual-frequency liquid crystal transmission and reflection array structure according to any one of claims 1 to 8, wherein the first frequency band is 27 GHz to 29 GHz.

16. The active dual-frequency liquid crystal transmission and reflection array structure according to any one of claims 1 to 8, wherein the second frequency band is 17 GHz to 19 GHz.

17. The active dual-frequency liquid crystal transmission and reflection array structure according to any one of claims 1 to 8, wherein a number of the first surface units (111), a number of the second surface units (121), a number of the third surface units (311), and a number of the fourth surface units (321) are all N*N, and N is a positive integer.

18. The active dual-frequency liquid crystal transmission and reflection array structure according to any one of claims 2 to 5, wherein the first surface outer frame patch (1111) and a corresponding first surface inner frame patch (1115) have a first surface rectangle slit (1113) therebetween, and a center of each of the first surface inner frame patches (1115) has a first surface rectangle slot (1114).

19. The active dual-frequency liquid crystal transmission and reflection array structure according to any one of claims 2 to 5, wherein a length and a width of the first surface outer frame patch (1111) are 0.5 mm to 3.3 mm.

20. The active dual-frequency liquid crystal transmission and reflection array structure according to any one of claims 2 to 5, wherein the first surface cross-shaped patch (1112) has a first longitudinal part and a first lateral part, and a length of the first longitudinal part and a length of the first lateral part are 1.5 mm to 8.5 mm.

21. The active dual-frequency liquid crystal transmission and reflection array structure according to any one of claims 3 to 6, wherein the four second surface rectangle patches (1211) and the plurality of second surface metal lines (1213) surround to form a second surface cross-shaped opening (1214).

22. The active dual-frequency liquid crystal transmission and reflection array structure according to any one of claims 3 to 6, wherein the second surface cross-shaped slot (1212) has a second longitudinal part and a second lateral part, and a width of the second longitudinal part and a width of the second lateral part are 0.57 mm to 0.67 mm, and a length of the second longitudinal part and a length of the second lateral part are 3.25 mm to 3.35 mm.

23. The active dual-frequency liquid crystal transmission and reflection array structure according to any one of claims 4, 5, or 7, wherein the four third surface rectangle patches (3111) and the plurality of third surface metal lines (3113) surround to form a third surface cross-shaped opening (3114).

## Amended claims

### Amended claims in accordance with Rule 137(2) EPC.

1. An active dual-frequency liquid crystal transmission and reflection array structure, comprising:
a first substrate layer (1), having a first upper surface (11) and a first lower surface (12);
a second substrate layer (3), having a second upper surface (31) and a second lower surface (32);
a first liquid crystal layer (2), stacked and connected between the first substrate layer (1) and the second substrate layer (3);
a first surface unit (111), arranged in an array on the first upper surface (11);
a second surface unit (121), arranged in an array on the first lower surface (12);
a third surface unit (311), arranged in an array on the second upper surface (31); and
a fourth surface unit (321), arranged in an array on the second lower surface (32),
wherein when the first liquid crystal layer (2) is not applied with a bias voltage, a center operating frequency of the active dual-frequency liquid crystal transmission and reflection array structure lies in a first frequency band,
wherein when the first liquid crystal layer (2) is applied with a bias voltage, the center operating frequency of the active dual-frequency liquid crystal transmission and reflection array structure lies in a second frequency band, and
wherein the first frequency band is higher than the second frequency band,
the active dual-frequency liquid crystal transmission and reflection array structure is **characterized in that**
wherein the first surface unit (111) comprises four first surface outer frame patches (1111) and a first surface cross-shaped patch (1112),
wherein each of the first surface outer frame patches (1111) has a first surface inner frame patch (1115) therein, and
wherein the four first surface outer frame patches (1111) are respectively arranged around the first surface cross-shaped patch (1112).

2. The active dual-frequency liquid crystal transmission and reflection array structure according to claim 1, wherein the second surface unit (121) comprises four second surface rectangle patches (1211), a plurality of second surface metal lines (1213) connected to edges of the four second surface rectangle patches (1211), and a second surface cross-shaped slot (1212) located at a center of each of the second surface rectangle patches (1211).

3. The active dual-frequency liquid crystal transmission and reflection array structure according to claim 2,
wherein the third surface unit (311) comprises four third surface rectangle patches (3111), a plurality of third surface metal lines (3113) connected to edges of the four third surface rectangle patches (3111), and a third surface square slot (3112) located at a center of each of the third surface rectangle patches (3111).

4. The active dual-frequency liquid crystal transmission and reflection array structure according to claim 3, wherein the fourth surface unit (321) is a fourth surface cross-shaped patch.

5. The active dual-frequency liquid crystal transmission and reflection array structure according to claim 1,
wherein the third surface unit (311) comprises four third surface rectangle patches (3111), a plurality of third surface metal lines (3113) connected to edges of the four third surface rectangle patches (3111), and a third surface square slot (3112) located at a center of each of the third surface rectangle patches (3111).

6. The active dual-frequency liquid crystal transmission and reflection array structure according to claim 1, wherein the fourth surface unit (321) is a fourth surface cross-shaped patch.

7. The active dual-frequency liquid crystal transmission and reflection array structure according to any one of claims 1 to 6,
wherein a reflective unit cell is formed by a first part of the active dual-frequency liquid crystal transmission and reflection array structure, and
wherein when the first liquid crystal layer (2) is not applied with a bias voltage, the reflective unit cell is used as a reflection surface, and a center operating frequency of the reflective unit cell lies in the first frequency band.

8. The active dual-frequency liquid crystal transmission and reflection array structure according to any one of claims 1 to 6, wherein the first part of the active dual-frequency liquid crystal transmission and reflection array structure comprises a first surface outer frame patch (1111) of the first surface unit (111), a first surface inner frame patch (1115) of the first surface unit (111), the first substrate layer (1), a second surface rectangle patch (1211) of the second surface unit (121), a second surface metal line (1213) of the second surface unit (121), the first liquid crystal layer (2), the second substrate layer (3), a third surface rectangle patch (3111) of the third surface unit (311), and a third surface metal line (3113) of the third surface unit (311).

9. The active dual-frequency liquid crystal transmission and reflection array structure according to any one of claims 1 to 6,
wherein a transmissive unit cell is formed by a second part of the active dual-frequency liquid crystal transmission and reflection array structure, and
wherein when the first liquid crystal layer (2) is applied with a bias voltage, the transmissive unit cell is used as a transmission surface, and a center operating frequency of the transmissive unit cell lies in the second frequency band.

10. The active dual-frequency liquid crystal transmission and reflection array structure according to any one of claims 1 to 6, wherein a second part of the active dual-frequency liquid crystal transmission and reflection array structure comprises a first surface cross-shaped patch (1112) of the first surface unit (111), the first substrate layer (1), the second surface unit (121), the first liquid crystal layer (2), the third surface unit (311), the second substrate layer (3), and the fourth surface unit (321).

11. The active dual-frequency liquid crystal transmission and reflection array structure according to any one of claims 1 to 6, wherein the first surface unit (111), the second surface unit (121), the third surface unit (311), and the fourth surface unit (321) are formed by metal materials.

12. The active dual-frequency liquid crystal transmission and reflection array structure according to any one of claims 1 to 6, wherein before and after the first liquid crystal layer (2) is applied with a bias voltage, a dielectric constant and a tangent loss of the first liquid crystal layer (2) are 2.55 to 3.76 and 0.004 to 0.006, respectively.

13. The active dual-frequency liquid crystal transmission and reflection array structure according to any one of claims 1 to 6, wherein the first frequency band is 27 GHz to 29 GHz.

14. The active dual-frequency liquid crystal transmission and reflection array structure according to any one of claims 1 to 6, wherein the second frequency band is 17 GHz to 19 GHz.

15. The active dual-frequency liquid crystal transmission and reflection array structure according to any one of claims 1 to 6, wherein a number of the first surface units (111), a number of the second surface units (121), a number of the third surface units (311), and a number of the fourth surface units (321) are all N*N, and N is a positive integer.

16. The active dual-frequency liquid crystal transmission and reflection array structure according to any one of claims 1 to 4, wherein the first surface outer frame patch (1111) and a corresponding first surface inner frame patch (1115) have a first surface rectangle slit (1113) therebetween, and a center of each of the first surface inner frame patches (1115) has a first surface rectangle slot (1114).

17. The active dual-frequency liquid crystal transmission and reflection array structure according to any one of claims 1 to 4, wherein a length and a width of the first surface outer frame patch (1111) are 0.5 mm to 3.3 mm.

18. The active dual-frequency liquid crystal transmission and reflection array structure according to any one of claims 1 to 4, wherein the first surface cross-shaped patch (1112) has a first longitudinal part and a first lateral part, and a length of the first longitudinal part and a length of the first lateral part are 1.5 mm to 8.5 mm.

19. The active dual-frequency liquid crystal transmission and reflection array structure according to any one of claims 2 to 4, wherein the four second surface rectangle patches (1211) and the plurality of second surface metal lines (1213) are arranged to form a second surface cross-shaped opening (1214).

20. The active dual-frequency liquid crystal transmission and reflection array structure according to any one of claims 2 to 4, wherein the second surface cross-shaped slot (1212) has a second longitudinal part and a second lateral part, and a width of the second longitudinal part and a width of the second lateral part are 0.57 mm to 0.67 mm, and a length of the second longitudinal part and a length of the second lateral part are 3.25 mm to 3.35 mm.

21. The active dual-frequency liquid crystal transmission and reflection array structure according to any one of claims 3 to 5, wherein the four third surface rectangle patches (3111) and the plurality of third surface metal lines (3113) are arranged to form a third surface cross-shaped opening (3114).
